# FASCICULE DE BREVET EUROPEEN

(11) **EP 0 631 452 B1**
(45) Date de publication et mention de la délivrance du brevet: **15.09.1999**
(21) Numéro de dépôt: 94460021.2
(22) Date de dépôt: 23.06.1994
(51) Int. Cl.: H04Q 7/22

(54) **Procédé de gestion d'une messagerie pour système de radiomessagerie cellulaire**
Verwaltungsverfahren eines Botschaftensystems für Zellularfunknachrichtensystem
Messaging centre management method for cellular radio messaging

(30) Priorité: 23.06.1993 FR 9307871
(43) Date de publication de la demande: 28.12.1994
(73) Titulaire: COMPAGNIE FINANCIERE POUR LE RADIOTELEPHONE, ( COFIRA) S.A., F-75008 Paris (FR)
(72) Inventeur: Remy, Jean-Gabriel, F-94170 Le Perreux (FR)
(74) Mandataire: Vidon, Patrice

(56) Documents cités:
- EP-A- 0 295 904
- WO-A-91/03137
- WO-A-92/06548
- WO-A-92/14330
- GB-A- 2 244 409

## Description

Le domaine de l'invention est celui des systèmes de radiomessagerie cellulaire, du type GSM ("Global System for Mobile communication" en anglo-saxon) par exemple.

Plus précisément, l'invention concerne un procédé de gestion d'une messagerie pour de tels systèmes de radiomessagerie cellulaire.

L'invention a de nombreuses applications, telles que, par exemple, la mise à disposition d'une messagerie vocale entièrement automatique pour l'ensemble des abonnés à un système GSM.

Plus généralement, l'invention peut s'appliquer dans tous les cas où du fait d'une indisponibilité temporaire de l'abonné auquel il adresse une demande connexion, un appelant désire laisser un message à cet abonné, ce message étant délivré en différé à l'abonné.

Le terme indisponible possède ici plusieurs significations, selon que l'abonné est :
- injoignable : la station d'émission/réception associée à cet abonné est hors service (position d'arrêt par exemple) ou bien hors de portée du système de radiomessagerie (passage sous un tunnel par exemple) ;
- occupé: la station de l'abonné est joignable (au sens défini précédemment) mais il se trouve déjà en ligne ;
- sans réponse : la station de l'abonné est joignable mais l'abonné ne désire pas répondre à l'appel.

On connaît, dans l'état de la technique, différents types de procédé de gestion de messagerie pour système de radiomessagerie cellulaire.

Toutefois, aucun de ces procédés connus n'est entièrement automatique pour un abonné en ce sens que lorsque ce dernier désire prendre connaissance des messages qui lui sont destinés, il doit prendre l'initiative d'appeler la messagerie puis prouver son identité en fournissant un mot de passe à cette messagerie. Il peut donc s'écouler un laps de temps important entre le moment où un message est stocké par la messagerie et le moment où l'abonné décide d'en prendre connaissance. Par ailleurs, l'utilisation d'une procédure d'authentification par mot de passe est contraignante pour l'abonné et accroît la complexité de la messagerie.

De même, ces différents types connus de procédé de gestion de messagerie pour système de radiomessagerie cellulaire ne sont pas non plus entièrement automatique pour un appelant.

En effet, dans le cas d'une messagerie vocale par exemple, lorsque l'abonné appelé est temporairement indisponible, l'appelant doit généralement interrompre cette connexion pour demander une nouvelle connexion, adressée celle-ci à la messagerie. Il est clair que le fait de devoir mettre en oeuvre une nouvelle demande de connexion, ainsi que l'incertitude quant au moment réel de prise de connaissance de ce message par l'abonné (qu'il tente de joindre), amènent souvent l'appelant à ne laisser aucun message. En ce sens, les messageries existantes sont peu incitatives au dépôt de messages.

Enfin, les messageries connues sont généralement conçues de façon telle qu'à chaque abonné est associé en permanence une boîte aux lettres électronique. Ceci implique, pour la messagerie, la nécessité de posséder d'importantes capacités de stockage de messages, bien que celles-ci présentent un faible taux de remplissage.

Des messageries connues sont également décrites dans les trois documents de brevet suivants :
- le document de brevet GB-A-2 244 409, qui décrit un système de radiocommunication comprenant une station de base, une station mobile, et une messagerie, connectée à la station de base, pour stocker un message à transmettre à une station mobile ;
- le document de brevet WO-A-91 03137, qui décrit un réseau téléphonique cellulaire comprenant un central d'échange auquel sont connectés d'une part une pluralité de téléphones cellulaires (ou mobiles) et d'autre part un centre de messages vocaux (ou messagerie) ;
- le document de brevet WO-A-92 14330, qui décrit un procédé et un système de report de messages vocaux vers leurs destinataires dans un réseau multi-service (notamment le réseau GSM).

On notera qu'aucun de ces trois documents de brevet ne divulgue ni ne suggère l'utilisation d'un service de messages courts (SMS) dans le sens appelé vers SMS (avec l'envoi d'un accusé de réception différée du message court par l'abonné), pour indiquer à la messagerie que l'abonné est à nouveau joignable. En d'autres termes, aucun de ces documents ne décrit un procédé selon lequel, à la réception d'un accusé de réception différée d'un message court, la messagerie effectue une tentative instantanée de rappel de l'abonné, de façon à délivrer le message stocké à l'abonné (l'accusé de réception différée indiquant dans ce cas que l'abonné est joignable).

L'invention a notamment pour objectif de pallier ces différents inconvénients de l'état de la technique.

Plus précisément, un objectif de l'invention est de fournir un procédé de gestion d'une messagerie pour système de radiomessagerie cellulaire, le service de messagerie devant être entièrement automatique et simple d'utilisation, aussi bien pour l'appelant que pour l'appelé (seul l'appelé étant obligatoirement un abonné au système de radiomessagerie cellulaire).

L'invention a également pour objectif de fournir un tel procédé qui permette de minimiser les besoins en capacités de stockage.

Ces objectifs, ainsi que d'autres qui apparaîtront par la suite, sont atteints selon l'invention à l'aide d'un procédé de gestion d'une messagerie pour système de radiomessagerie cellulaire dans lequel un abonné auquel est adressé une demande de connexion est susceptible d'être temporairement indisponible,
ledit procédé comprenant les étapes suivantes
   - on détecte que l'abonné est temporairement indisponible ;
   - on renvoie ladite demande de connexion vers ladite messagerie ;
   - ladite messagerie stocke un message destiné à être délivré en différé à l'abonné temporairement indisponible ;
   - ladite messagerie rappelle automatiquement ledit abonné selon une stratégie de rappel configurable, de façon à délivrer ledit message stocké à l'abonné ;
ladite étape de stockage d'un message étant accompagnée d'une étape d'émission, par l'intermédiaire d'un service de messages courts, d'un message court vers l'abonné temporairement indisponible,
ladite stratégie de rappel configurable consistant à effectuer une tentative instantanée de rappel de l'abonné à la réception d'un accusé de réception différée du message court, ledit accusé de réception différée indiquant que ledit abonné est joignable.

De cette façon, lorsque l'abonné (ou appelé) est temporairement indisponible le demandeur (ou l'appelant) voit sa demande de connexion automatiquement renvoyée vers la messagerie. Ainsi, on incite l'appelant à laisser plus volontiers un message.

De plus, du fait que la messagerie rappelle automatiquement l'abonné lorsqu'un nouveau message est enregistré, la prise de connaissance des messages par l'abonné se fait avec le minimum de retard et sans aucune procédure d'authentification par mot de passe.

La stratégie de rappel est basée sur le service de messages courts (SMS (short Message Service) en anglo-saxon). Ce service permet de garantir que l'abonné est joignable en ne délivrant l'accusé de réception différée que lorsque le message court, envoyé vers l'abonné lorsque le message est stocké dans la messagerie, est effectivement reçu par l'abonné.

Avantageusement, ladite stratégie de rappel consiste également à rappeler systématiquement l'abonné au bout de durées prédéterminées après ladite tentative instantanée, lorsque l'abonné, bien que joignable, est encore indisponible,
lesdites durées prédéterminées étant fonction d'au moins un des paramètres appartenant au groupe comprenant :
- l'heure;
- la date;
- le type d'indisponibilité de l'abonné, à savoir "occupé" ou "ne répond pas".

En effet, le SMS garantit seulement que l'abonné est joignable, or, l'abonné peut déjà être en ligne ou bien décider de ne pas répondre.

De façon avantageuse, ladite stratégie de rappel consiste également à rappeler systématiquement l'abonné au bout de durées prédéterminées après l'instant de détection que l'abonné est temporairement indisponible.

La stratégie de rappel consiste alors également, pour la messagerie, à essayer de joindre l'abonné à intervalles de temps paramétrés, jusqu'à ce qu'une communication soit établie et le ou les messages délivrés.

Avantageusement, lesdites durées prédéterminées sont fonction d'au moins un des paramètres appartenant au groupe comprenant :
- l'heure;
- la date;
- le type d'indisponibilité de l'abonné, à savoir "injoignable" ou "occupé" ou "ne répond pas".

Ainsi, par exemple, la durée entre deux tentatives de rappel est plus longue lorsque l'abonné est injoignable que lorsque l'abonné est occupé.

Préférentiellement, ladite étape de stockage d'un message consiste à enregistrer ledit message dans une zone de stockage liée de façon biunivoque à l'abonné,
ladite zone de stockage étant créée de façon dynamique lorsque d'une part aucune autre zone de stockage n'est associée audit abonné et d'autre part ledit message destiné audit abonné doit être stocké.

Ainsi, une zone de stockage correspond à la "boîte aux lettres" personnelle d'un abonné uniquement si un message adressé à celui-ci doit être stocké.

De façon préférentielle, le procédé de l'invention comprend également une étape d'effacement dudit message stocké dans ladite zone de stockage,
ladite zone de stockage étant supprimée de façon dynamique lorsqu'elle ne contient plus aucun message.

De cette façon, on optimise les ressources de stockage puisque d'une part une zone de stockage n'est créée que s'il existe un message à stocker et d'autre part une zone de stockage est supprimée dès lors qu'elle ne contient plus aucun message.

Avantageusement, ladite zone de stockage peut contenir deux types de message, à savoir les messages sensés avoir été délivrés à l'abonné et les messages sensés ne pas encore avoir été délivrés à l'abonné,
ladite étape d'effacement intervenant après une durée distincte selon le type de message.

En effet, on conserve généralement plus longtemps les messagesdont l'abonné n'a pas encore pris connaissance que les message déjà délivrés (ou sensés avoir été délivrés).

Dans un mode de réalisation préférentiel de l'invention, ladite stratégie de rappel consiste également à détecter un auto appel de ladite messagerie, ledit auto appel étant une demande de connexion adressée à l'abonné par ladite messagerie et renvoyée vers ladite messagerie après que l'abonné a été détecté temporairement indisponible, un auto appel détecté étant cassé.

Avantageusement, la détection d'un auto-appel consiste d'une part à comparer les informations contenues dans les champs "identité de la ligne appelante" et "adresse du demandé" du message initial d'adresse (MIF) accompagnant ledit rappel de l'abonné par la messagerie et possédant une fonction de signalisation, et d'autre part à analyser les informations contenues dans le champ "indicateur d'appel renvoyé" dudit message initial d'adresse.

De façon avantageuse, ladite zone de stockage possède un numéro d'adressage calculé à partir d'informations caractéristiques dudit abonné.

Dans un mode de réalisation préférentiel de l'invention, lesdites informations caractéristiques dudit abonné comprennent le numéro téléphonique dudit abonné, et le calcul dudit numéro d'adressage de la zone de stockage consiste :
- à fenêtrer ledit numéro téléphonique de l'abonné en plaçant une fenêtre justifiée sur le dernier chiffre dudit numéro téléphonique, puis
- à sous-fenêtrer ladite fenêtre en plaçant moins une première et une seconde sous-fenêtres dans ladite fenêtre, ledit numéro d'adressage étant obtenu en concaténant d'une part soit le numéro contenu dans ladite seconde sous-fenêtre soit un numéro réduit déduit du numéro contenu dans ladite seconde sous-fenêtre et d'autre part soit le numéro contenu dans ladite première sous-fenêtre soit un numéro réduit déduit du numéro contenu dans ladite première sous-fenêtre.

De façon avantageuse, ledit numéro téléphonique dudit abonné comprend neuf chiffres et est noté ZABPQMCDU, ladite fenêtre contient le numéro BPQMCDU, ladite première sous-fenêtre contient le numéro BPQ, ladite seconde sous-fenêtre contient le numéro MCDU, et ledit numéro d'adressage est :
- soit BPQMCDU, si le numéro BPQ contenu dans la première sous-fenêtre est conservé ;
- soit xyz MCDU, si le numéro BPQ contenu dans la première sous-fenêtre est remplacé par le numéro réduit xyz ;
- soit encore xyz abcd s'il est nécessaire de modifier le contenu des deux sous-fenêtres, du fait des numéros de BAZ déjà affectés.

Avantageusement, lesdites informations caractéristiques dudit abonné sont les informations contenues dans le champ "identité du premier appelé" du message initial d'adresse (MIF) accompagnant ladite demande de connexion renvoyée vers la messagerie et possédant une fonction de signalisation.

De cette façon, on utilise le message de signalisation MIF afin d'authentifier l'abonné. Le message initial d'adresse (MIF) comprend notamment des champs d'informations concernant l'appelant, le premier demandé (dans le cas d'un renvoi d'appel) et le demandé.

Dans le cas d'une demande de connexion renvoyée vers la messagerie : l'appelant est le correspondant qui tente de joindre l'abonné, le premier demandé est l'abonné, et le demandé est la messagerie.

Ainsi, dans le cas d'un réseau GSM où chaque abonné est entièrement identifié par les paramètres de sa carte SIM (pour "Subsriber Identity Module" en anglo-saxon), le MIF est lié de façon biunivoque à la carte SIM et peut donc être utilisé comme authentificateur de cette carte SIM (et par là même de l'abonné).

Préférentiellement, lors de l'étape de rappel automatique dudit abonné, le numéro de téléphone dudit abonné est calculé par ladite messagerie à partir dudit numéro d'adressage de la zone de stockage.

Dans un mode de réalisation avantageux de l'invention, le procédé de l'invention comprend une étape d'appel de la messagerie par l'abonné, afin que ledit abonné prenne connaissance d'au moins un éventuel message.

Dans ce cas, l'abonné appelle donc directement la messagerie. Cela lui permet par exemple de consulter des messages.

Avantageusement, lors de ladite étape d'appel de la messagerie par l'abonné, ledit numéro d'adressage de la zone de stockage est retrouvé par ladite messagerie à partir desdites informations caractéristiques dudit abonné, lesdites informations caractéristiques dudit abonné étant contenues dans le champ "identité de la ligne appelante" du message initial d'adresse (MIF) accompagnant ledit appel de la messagerie par l'abonné et possédant une fonction de signalisation.

Ainsi, de même que dans le cas du rappel de l'abonné par la messagerie, la gestion de la messagerie est entièrement automatique lors de l'étape d'appel de la messagerie par l'abonné. En d'autres termes, l'utilisation des informations contenues dans le MIF évite l'emploi d'un mot de passe ou de toute autre procédure d'authentification de l'abonné.

Dans un mode de réalisation préférentiel de l'invention, le procédé de l'invention comprend une étape d'armement/désarmement de ladite zone de stockage à laquelle ledit abonné est lié de façon biunivoque, le désarmement, respectivement l'armement, consistant à inhiber, respectivement autoriser, ladite étape de rappel automatique dudit abonné.

Avantageusement, ledit système de radiomessagerie cellulaire est un système GSM (Global System for Mobile communications).

De façon avantageuse, ledit message appartient au groupe comprenant :
- les messages vocaux ;
- les télécopies ;
- les consultations de bases de données.

Il est clair toutefois que le procédé selon l'invention n'est pas lié à un type particulier de message.

D'autres caractéristiques et avantages de l'invention apparaîtront à la lecture de la description suivante d'un mode de réalisation préférentiel de l'invention donné à titre d'exemple indicatif et non limitatif, et des dessins annexés, dans lesquels :

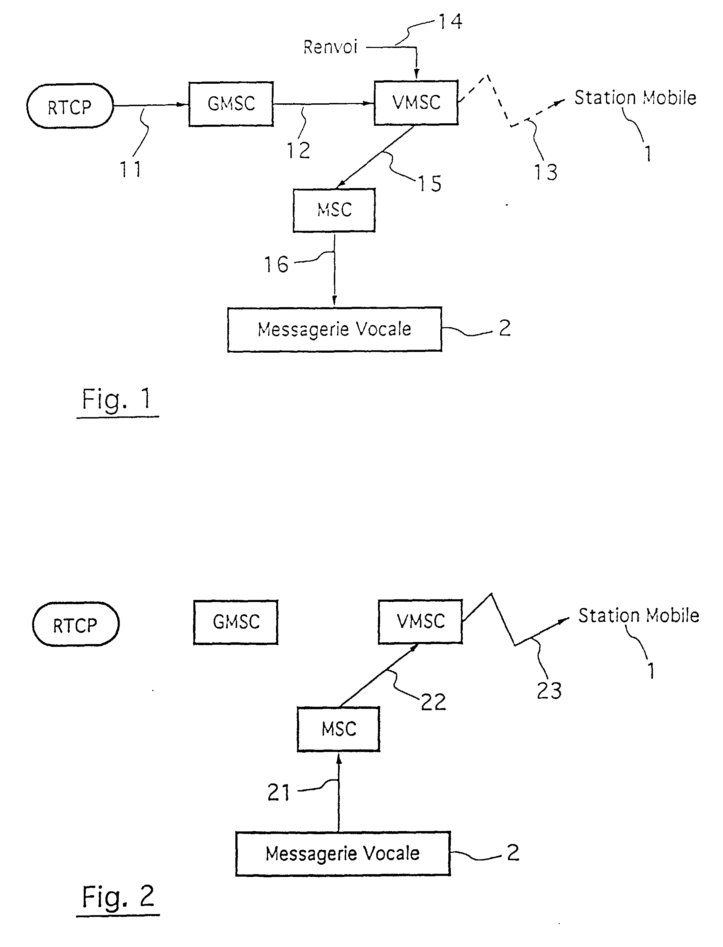

- les figures 1 à 4 présentent chacune un diagramme de fonctionnement d'une messagerie pour un système de radiomessagerie cellulaire, cette messagerie étant gérée grâce à un procédé selon l'invention, les figures 1 à 4 correspondant respectivement au cas où :
   ∗ une demande de connexion adressée à un abonné par un correspondant est renvoyée vers la messagerie ;
   ∗ une demande de connexion est adressée à un abonné par la messagerie ;
   ∗ une demande connexion est adressée à un abonné par un abonné ;
   ∗ une demande connexion adressée à un abonné par la messagerie est renvoyée vers la messagerie ;
- la figure 5 présente un exemple d'organigramme décrivant le fonctionnement de la messagerie en fonction des différents types de demande de connexion reçue ;
- la figure 6 présente un exemple d'organigramme décrivant le mécanisme de rappel de l'abonné par la messagerie ;
- la figure 7 présente de façon simplifiée un message initial d'adresse du type utilisé dans un mode de réalisation préférentiel de l'invention ;
- les figures 8A, 8B et 8C présentent chacune une exemple de calcul du numéro d'adressage de la zone de stockage de message, chacun de ces trois exemples pouvant être mis en oeuvre dans un procédé de gestion d'une messagerie selon l'invention.

L'invention concerne donc un procédé de gestion d'une messagerie pour système de radiomessagerie cellulaire. Il s'agit d'offrir à chacun des abonnés à ce système de radiomessagerie un service de messagerie entièrement automatique, sûr et très simple d'emploi.

La description qui va suivre concerne un mode de réalisation préférentiel du procédé selon l'invention appliqué à une messagerie vocale réservée aux abonnés du système GSM (Global System for Mobile communications).

Il est clair que l'invention n'est nullement limitée à cette application. D'une façon générale les messages traités par la messagerie gérée par le procédé de l'invention peuvent être d'un type quelconque (messages vocaux, télécopies, consultations de bases de données, etc...). De même, le procédé selon l'invention de gestion d'une messagerie peut être mis en oeuvre pour tous types de système de radiomessagerie cellulaire.

Dans le système GSM, chaque abonné est associé à une station mobile lui permettant d'émettre ou de recevoir des appels tout en se déplaçant dans un espace prédéterminé. Cet espace d'évolution des stations mobiles est décomposé en un réseau de cellules adjacentes. A chaque cellule est associée une station de base émettrice/réceptrice distincte. Les stations de base sont reliées à un centre de communication (ou MSC pour "Mobile Switching Center" en anglo-saxon), qui assure la connexion entre un abonné GSM et un correspondant distant (qui est par exemple un abonné du réseau téléphonique publique (RTCP) ou un autre abonné GSM).

Les figures 1 à 4 présentent chacune un diagramme de fonctionnement d'une messagerie vocale pour un système GSM, cette messagerie vocale étant gérée grâce à un procédé de gestion selon l'invention.

La figure 1 correspond au cas d'une demande de connexion adressée à un abonné 1 par un correspondant, et renvoyée vers la messagerie 2.

On suppose dans cet exemple que le correspondant est un abonné du RTCP. L'appel du correspondant arrive (11) dans un premier centre de commutation GMSC jouant le rôle d'interface entre le RTCP et le réseau GSM. Puis cet appel est routé (12) sur le réseau GSM jusqu'à un second centre de commutation VMSC capable de faire parvenir (13) la demande de connexion du correspondant jusqu'à l'abonné 1 (c'est-à-dire la station mobile). En supposant que l'abonné 1 est temporairement indisponible à ce moment, on détecte une telle indisponibilité et, grâce à un mécanisme de renvoi d'appel (14), la demande de connexion est à nouveau routée (15) vers un autre centre de commutation MSC qui permet de faire entrer (16) cette demande dans la messagerie 2.

Ensuite, la messagerie offre la possibilité au correspondant de laisser un message, ce message étant stocké afin d'être délivré en différé à l'abonné temporairement indisponible.

La figure 2 correspond au cas où la messagerie 2 rappelle l'abonné 1. Lors de ce rappel, entièrement automatique, la demande de connexion émise par la messagerie 2 est acheminée (21) vers le centre de commutation MSC, puis cette demande est routée (22) jusqu'au centre de communication VMSC, avant d'arriver (23) jusqu'à l'abonné 1.

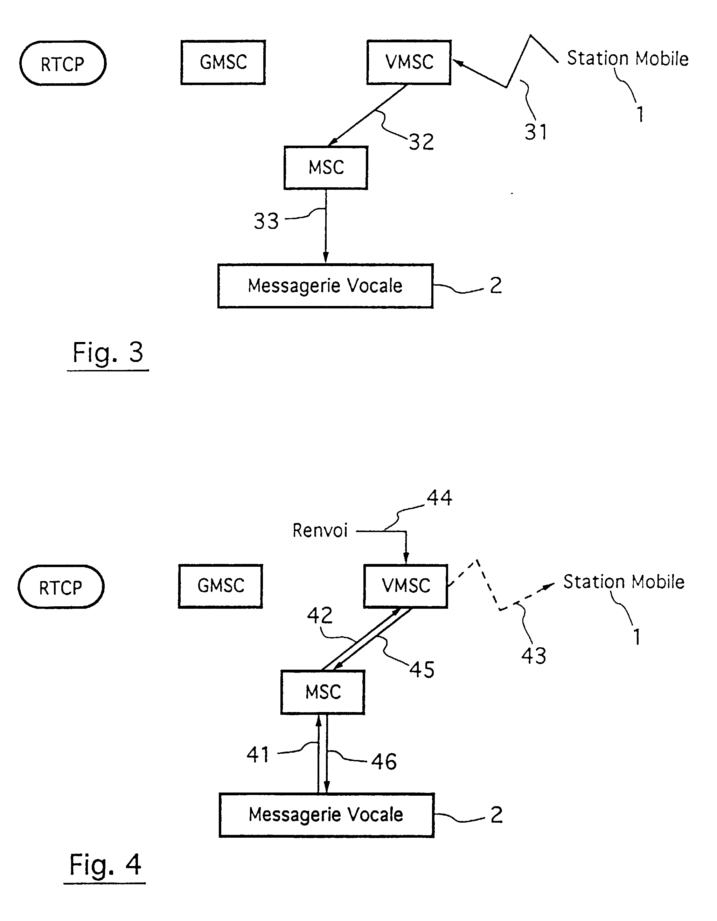

La figure 3 correspond au cas où l'abonné 1 rappelle la messagerie 2. Lors de ce rappel, qui est à l'initiative de l'abonné, la demande de connexion émise par l'abonné est acheminée (31) vers le centre de commutation VMSC, puis cette demande est routée (32) jusqu'au centre de commutation MSC, avant d'arriver (33) jusqu'à la messagerie 2.

Ainsi, même si, en fonctionnement normal, la messagerie rappelle automatiquement l'abonné afin de lui délivrer le ou les messages stockés, on offre à l'abonné la possibilité de rappeler la messagerie afin de prendre connaissance d'éventuels messages.

La figure 4 correspond au cas d'un auto-appel de la messagerie 2. C'est-à-dire le cas où la messagerie tente de joindre l'abonné, et où l'appel lui est renvoyé du fait que celui-ci est indisponible. Lors d'un auto-appel, une demande de connexion émise par la messagerie est acheminée (41) vers le centre de commutation MSC, puis cette demande est routée (42) jusqu'au centre de commutation VMSC capable de faire parvenir (43) la demande de connexion de la messagerie jusqu'à l'abonné. En supposant l'abonné 1 temporairement indisponible à cet instant, on détecte une telle indisponibilité et, grâce à un mécanisme de renvoi d'appel (44), la demande de connexion est à nouveau routée (45) vers le centre de commutation MSC qui permet de faire entrer (46) cette demande dans la messagerie 2. Un tel auto-appel est cassé par la messagerie dès qu'il est détecté.

Lors de l'étape de stockage d'un message dans la messagerie, le message est enregistré dans une zone de stockage liée de façon biunivoque à l'abonné. Dans l'exemple d'une messagerie vocale, chaque zone de stockage est une "boîte aux lettres" vocale dédiée temporairement à un abonné. Les boîtes vocales sont crées de façon dynamique : c'est seulement lorsque d'une part, un message destiné à un abonné doit être stocké et d'autre part, cet abonné ne possède pas déjà une boîte que la messagerie crée une boîte dédiée à cet abonné.

Chaque boîte vocale possède un numéro d'adressage calculé à partir d'informations caractéristiques de l'abonné auquel elle est liée de façon biunivoque.

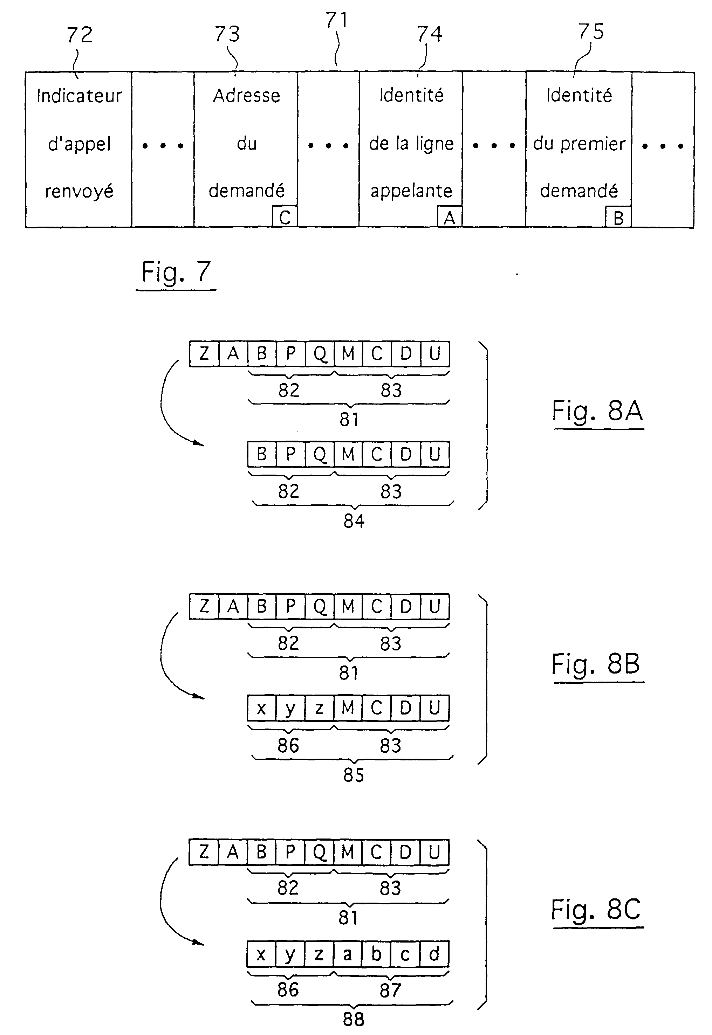

Les figures 8A, 8B et 8C présentent chacune un exemple de calcul du numéro de boîte dans le cas où les informations caractéristiques de l'abonné utilisées pour ce calcul sont constituées du numéro téléphonique de l'abonné. On prend pour la suite l'exemple d'un numéro à neuf chiffres noté ZABPQMCDU.

Dans les trois exemples (figures 8A, 8B et 8C), on place une fenêtre 81 justifiée sur le dernier chiffre (noté U) du numéro téléphonique et contenant sept chiffres. Cette fenêtre contient donc le numéro BPQMCDU. Puis, on sous-fenêtre cette fenêtre 81, en y plaçant deux sous-fenêtres 82, 83.

La première sous-fenêtre 82 contient le numéro BPQ et la seconde sous-fenêtre 83 contient le numéro MCDU.

Dans l'exemple présenté sur la figure 8A, le numéro de boîte vocale 84 est obtenu en concaténant les numéros contenus dans les deux sous-fenêtres 82, 83. Le numéro de boîte vocale 84 est donc BPQMCDU.

Dans l'exemple présenté sur la figure 8B, le numéro de boîte vocale 85 est obtenu en concaténant le numéro contenu dans la seconde sous-fenêtre 83 et un numéro réduit 86 (noté xyz) déduit du numéro contenu dans la première sous-fenêtre 82. Le numéro de boîte vocale 85 est donc xyz MCDU.

Dans l'exemple présenté sur la figure 8C, le numéro de boîte vocale 88 est obtenu en concaténant d'une part un numéro réduit 86 (noté xyz) déduit du numéro contenu dans la première sous-fenêtre 82 et d'autre part, un numéro réduit 87 (noté abcd) déduit du numéro contenu dans la seconde sous-fenêtre 83. Le numéro de boîte vocale 88 est donc xyz abcd.

Inversement, lorsque la messagerie rappelle l'abonné, le numéro de téléphone de l'abonné est calculé à partir du numéro de boîte vocale. La messagerie comprend par exemple une table de correspondance entre les numéros de téléphone et les numéros de boîtes vocales.

Selon l'invention, les messages stockés dans une boîte sont effacés après l'écoulement de durées prédéterminées. Une boîte étant supprimée (c'est-à-dire qu'elle est disponible pour un autre abonné) dès qu'elle ne contient plus aucun message.

En ce qui concerne l'effacement des messages, on distingue deux types de message : les messages sensés avoir été délivrés à l'abonné et les messages non sensés avoir été délivrés à l'abonné. Les messages sensés avoir été délivrés à l'abonné, qui sont les messages que l'abonné a effectivement écoutés ou les messages qu'il n'a pas écouté entièrement, sont par exemple effacés au bout de douze heures. Les messages non sensés avoir été délivrés à l'abonné, qui sont les messages reçus depuis le dernier rappel de l'abonné par la messagerie (ou bien depuis le dernier rappel de la messagerie par l'abonné si ce rappel est plus récent que le rappel cité auparavant), sont conservés plus longtemps, une semaine par exemple.

Dans le mode de réalisation préférentiel de l'invention décrit ci-dessous, on utilise le message initial d'adresse (MIF) qui est un message de signalisation CCITT n° 7 accompagnant chaque communication véhiculée sur le réseau fixe numérique ou le réseau GSM. Ce MIF transite sur le réseau sémaphore lors de l'établissement d'une communication. Le sous-système utilisateur généralement mis en oeuvre est le SSUTR2 dont les spécifications sont rédigées par le CNET (Centre National d'Etudes des Télécommunications). Ainsi, dans le cas d'un système GSM, chaque abonné est identifié par une carte électronique (SIM pour "Subscriber Identity Module" en anglo-saxon) qui permet d'authentifier ses demandes d'appel. Ces demandes sont véhiculées par le réseau GSM avec comme identifiant, le MIF.

Comme présenté de façon simplifiée sur la figure 7, un MIF 71 comprend notamment :
- un champ "identité de la ligne appelante" 75 (noté A) ;
- un champ "identité du premier demandé" 74 (noté B) ;
- un champ "adresse du demandé" 73 (noté C) ;
- un champ "indicateur d'appel renvoyé" 72 (noté D).

Lorsque l'abonné reçoit un appel d'un correspondant alors qu'il est temporairement indisponible, l'appel entrant est renvoyé sur la messagerie. Ce renvoi est programmé dans le réseau vers un numéro fixe de renvoi qui correspond au numéro d'accès de la messagerie. Le MIF correspondant est alors tel que :
- le champ "indicateur d'appel renvoyé" indique un renvoi ;
- le champ "identité de la ligne appelante" 75 contient notamment le numéro de téléphone du correspondant ;
- le champ "identité du premier demandé" 74 contient notamment le numéro de téléphone de l'abonné mobile ;
- le champ "indicateur d'appel renvoyé" 72 contient notamment le numéro de téléphone de la messagerie vocale.

Lorsqu'une demande est renvoyée vers la messagerie, la messagerie utilise les informations contenues dans le champ "identité du premier demandé" (c'est-à-dire le champ B) du MIF pour calculer un numéro de boîte vocale (des exemples d'un tel calcul ont été expliqués précédemment en relation avec les figures 8A et 8B).

Lorsque l'abonné appelle la messagerie, le MIF est tel que :
- le champ "identité de la ligne appelante" 75 contient notamment le numéro de téléphone de l'abonné ;
- le champ "identité du demandé" 73 contient notamment le numéro de téléphone de la messagerie.

Dans ce cas d'un appel de la messagerie par l'abonné, la messagerie utilise les informations contenues dans le champ "identité de la ligne appelante" (c'est-à-dire le champ A) du MIF pour calculer le numéro de la boîte vocale de cet abonné.

Dans le cas d'un auto-appel de la messagerie, le MIF correspondant est tel que :
- le champ "indicateur d'appel renvoyé" indique un renvoi ;
- le champ "identité de la ligne appelante" 75 contient notamment le numéro de téléphone de la messagerie ;
- le champ "identité du premier demandé" 74 contient notamment le numéro de téléphone de l'abonné ;
- le champ "adresse du demandé" 73 contient notamment le numéro de téléphone de la messagerie.

La messagerie détecte un auto-appel :
- d'une part en comparant les informations contenues dans les champs "identité de la ligne appelante" et "adresse du demandé" ; et
- d'autre part, en analysant la valeur du champ "indicateur d'appel renvoyé".

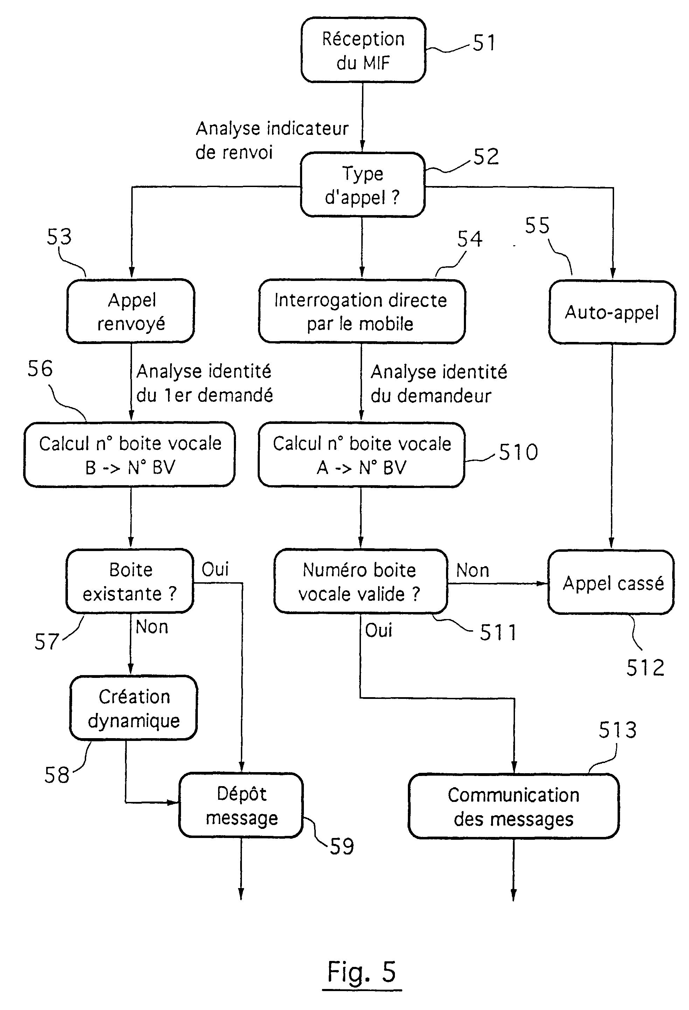

La figure 5 présente un exemple d'organigramme décrivant le fonctionnement de la messagerie en fonction des différents types d'appel reçu.

Avec toute demande de connexion, la messagerie reçoit 51 un MIF. L'analyse 52 de ce MIF (et notamment des informations contenues dans les champs A, B, C et D) permet de déterminer le type d'appel, à savoir :
- "appel renvoyé" 53 : l'appel d'un abonné par un correspondant est renvoyé sur la messagerie ;
- "interrogation directe par le mobile" 54 : l'abonné appelle la messagerie ;
- "auto-appel" 55 : l'appel d'un abonné par la messagerie est renvoyé sur la messagerie.

Dans le cas d'un "appel renvoyé" 53, la messagerie calcule 56 un numéro de boîte vocale BV à partir du champ B (c'est-à-dire le champ "identité du premier demandé") du MIF, puis vérifie 57 que cette boîte existe déjà (et en crée 58 une dans le cas contraire), et enfin dépose 59 le message dans la boîte.

Dans le cas d'une "interrogation directe par le mobile" 54, la messagerie calcule 510 un numéro de boîte vocale à partir du champ A (c'est-à-dire le champ "identité de la ligne appelante") du MIF, puis vérifie 511 que ce numéro de boîte est valide, et communique 513 ses messages à l'abonné si c'est le cas ou bien casse 512 l'appel dans le cas contraire.

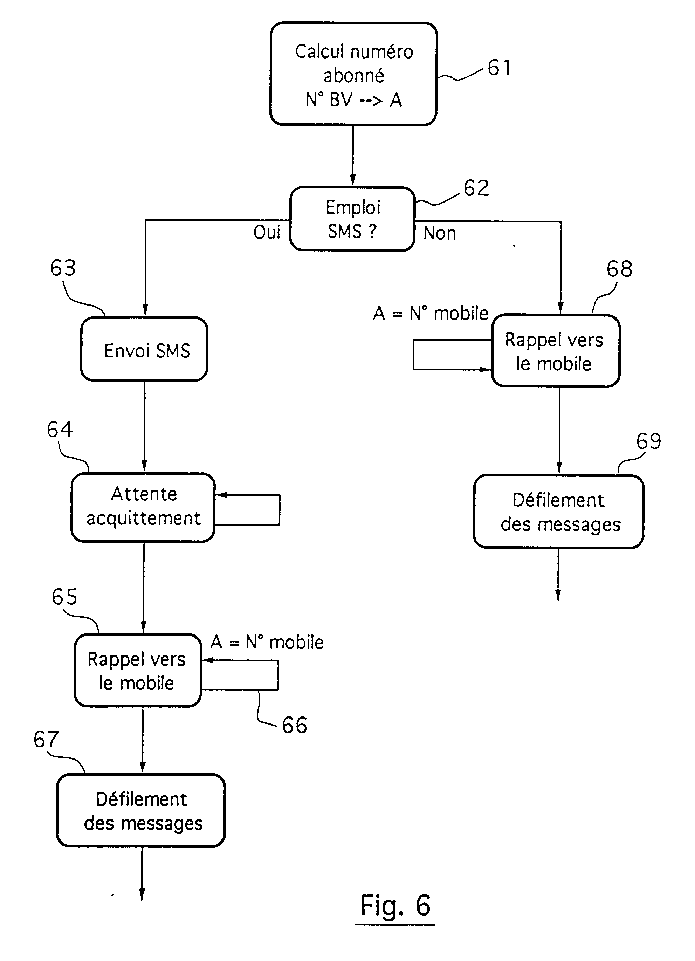

La figure 6 présente un exemple d'organigramme décrivant le mécanisme de rappel d'un abonné par la messagerie. Ce mécanisme permet de choisir 62 entre deux stratégies distinctes de rappel, après que la messagerie a calculé 61 le numéro de téléphone de l'abonné à partir de son numéro de boîte vocale.

Une première stratégie de rappel est basée sur l'utilisation d'un service de transmission de messages courts (SMS pour "Short Message Service" en anglo-saxon). Le SMS garantit la transmission d'un message court (de quelques dizaines d'octets par exemple), la réception de ce message court par le mobile (c'est-à-dire l'abonné) étant prouvée grâce à un message d'acquitement (ou accusé de réception).

Il est à noter que le SMS permet de déterminer si l'abonné est joignable ou non, un abonné étant injoignable si sa station est éteinte ou hors de portée de fonctionnement du système (hors de la zone de couverture ou passage sous un tunnel par exemple). Toutefois, l'abonné peut quand même être indisponible temporairement: soit parce que sa ligne est déjà occupée, soit parce qu'il ne désire pas répondre.

Dans le cas de la messagerie vocale, un message court est envoyé 63 systématiquement vers l'abonné dès le dépôt d'un message vocal. Une fois l'accusé de réception reçu 64, l'abonné devient donc à nouveau joignable, et la messagerie vocale peut le rappeler 65.

Si l'abonné est déjà en communication ou ne désire pas répondre, l'appel ne peut aboutir. Par conséquent, la messagerie appelle 66 à plusieurs reprises (à savoir une première fois lors de la réception du message d'acquittement, puis de façon espacée dans le temps), jusqu'à ce que l'abonné puisse prendre connaissance 67 de ses messages.

Les durées entre les tentatives d'appel sont par exemple fonction de l'heure, de la date et du type d'indisponibilité de l'abonné (selon que celui-ci est déjà en ligne ou ne désire pas répondre).

Une seconde stratégie de rappel, qui peut éventuellement être utilisée en complément de la première, consiste à essayer de joindre 68 l'abonné à intervalles de temps prédéterminés après l'instant de détection que l'abonné est temporairement indisponible, et ce jusqu'à ce que l'abonné puisse prendre connaissance 69 de ses messages.

Les intervalles de temps sont par exemple fonction de l'heure, de la date et du type d'indisponibilité de l'abonné. Selon que l'abonné est injoignable, ou déjà en ligne, on prend par exemple respectivement des intervalles de temps de durées croissantes de 5mn, 10 mn, 30 mn, 1 h, 12 h successivement), et des intervalles de temps de durée constante (de l'ordre de la minute).

On peut également prévoir la possibilité pour l'abonné de désarmer sa boîte vocale, si celui-ci désire ne plus recevoir automatiquement les messages qui lui sont destinés. La possibilité de réarmer sa boîte vocale par la suite lui étant également fournie.

Il est à noter que pour le correspondant, le renvoi sur la messagerie est automatique et, suite à un message d'accueil que lui délivre la messagerie, il lui suffit de communiquer son message. De même, pour l'abonné, la consultation de ses messages est automatique : quand la messagerie l'a joint (ou inversement), il lui suffit d'écouter les messages que la messagerie lui délivre.

Ce mécanisme est dicté par l'absence de code DTMF (Détection des Touches Multi-Fréquence). Toutefois, il est clair que dans une variante de l'invention, on peut prévoir la possibilité d'utiliser le DTMF, par exemple pour fournir une option de réécoute et de modification d'un message enregistré.

## Revendications

1. Procédé de gestion d'une messagerie pour système de radiomessagerie cellulaire dans lequel un abonné auquel est adressé une demande de connexion est susceptible d'être temporairement indisponible, ledit procédé comprenant les étapes suivantes :
- on détecte que l'abonné (1) est temporairement indisponible ;
- on renvoie ladite demande de connexion vers ladite messagerie (2) ;
- ladite messagerie (2) stocke un message destiné à être délivré en différé à l'abonné (1) temporairement indisponible, ladite étape de stockage d'un message étant accompagnée d'une étape d'émission (63), par l'intermédiaire d'un service de messages courts (SMS), d'un message court vers l'abonné (1) temporairement indisponible,
caractérisé en ce que ledit procédé comprend en outre l'étape suivante :
- à la réception (64) d'un accusé de réception différée dudit message court, ladite messagerie (2) effectue (65) une tentative instantanée de rappel de l'abonné (1), de façon à délivrer ledit message stocké à l'abonné (1), ledit accusé de réception différée indiquant que ledit abonné (1) est joignable.

2. Procédé selon la revendication 1, caractérisé en ce que ladite stratégie de rappel consiste également à rappeler systématiquement (66) l'abonné (1) au bout de durées prédéterminées après ladite tentative instantanée, lorsque l'abonné (1), bien que joignable, est encore indisponible,
et en ce que lesdites durées prédéterminées sont fonction d'au moins un des paramètres appartenant au groupe comprenant :
- l'heure ;
- la date ;
- le type d'indisponibilité de l'abonné (1), à savoir "occupé" ou "ne répond pas".

3. Procédé selon l'une quelconque des revendications 1 et 2, caractérisé en ce que ladite stratégie de rappel consiste également à rappeler systématiquement (68) l'abonné (1) au bout de durées prédéterminées après l'instant de détection que l'abonné (1) est temporairement indisponible.

4. Procédé selon la revendication 3, caractérisé en ce que lesdites durées prédéterminées sont fonction d'au moins un des paramètres appartenant au groupe comprenant :
- l'heure ;
- la date ;
- le type d'indisponibilité de l'abonné (1), à savoir "injoignable" ou "occupé" ou "ne répond pas".

5. Procédé selon l'une quelconque des revendications 1 à 4, caractérisé en ce que ladite étape de stockage d'un message consiste à enregistrer ledit message dans une zone de stockage liée de façon biunivoque à l'abonné (1),
et en ce que ladite zone de stockage est créée (58) de façon dynamique lorsque d'une part aucune autre zone de stockage n'est associée audit abonné (1) et d'autre part ledit message destiné audit abonné doit être stocké.

6. Procédé selon la revendication 5, caractérisé en ce qu'il comprend également une étape d'effacement dudit message stocké dans ladite zone de stockage,
et en ce que ladite zone de stockage est supprimée de façon dynamique lorsqu'elle ne contient plus aucun message.

7. Procédé selon la revendication 6, caractérisé en ce que ladite zone de stockage peut contenir deux types de message, à savoir les messages sensés avoir été délivrés à l'abonné (1) et les messages sensés ne pas encore avoir été délivrés à l'abonné (1),
et en ce que ladite étape d'effacement intervient après une durée distincte selon le type de message.

8. Procédé selon l'une quelconque des revendications 1 à 7, caractérisé en ce que ladite stratégie de rappel consiste également à détecter (55) un auto-appel de ladite messagerie (2), ledit auto-appel étant une demande de connexion adressée à l'abonné (1) par ladite messagerie (2) et renvoyée vers ladite messagerie après que l'abonné a été détecté temporairement indisponible,
et en ce qu'un auto-appel détecté est cassé (512).

9. Procédé selon la revendication 8, caractérisé en ce que la détection d'un auto-appel consiste d'une part à comparer les informations contenues dans les champs "identité de la ligne appelante" (74) et "adresse du demandé" (73) du message initial d'adresse (MIF ; 71) accompagnant ledit rappel de l'abonné (1) par la messagerie (2) et possédant une fonction de signalisation, et d'autre part à analyser les informations contenues dans le champ "indicateur d'appel renvoyé" (72) dudit message initial d'adresse (MIF ; 71).

10. Procédé selon l'une quelconque des revendications 5 à 9, caractérisé en ce que ladite zone de stockage possède un numéro d'adressage (84 ; 85) calculé à partir d'informations caractéristiques dudit abonné.

11. Procédé selon la revendication 10, caractérisé en ce que lesdites informations caractéristiques dudit abonné comprennent le numéro téléphonique (84 ; 85) dudit abonné,
et en ce que le calcul dudit numéro d'adressage de la zone de stockage consiste :
- à fenêtrer ledit numéro téléphonique de l'abonné en plaçant une fenêtre (81) justifiée sur le dernier chiffre dudit numéro téléphonique, puis
- à sous-fenêtrer ladite fenêtre (81) en plaçant moins une première et une seconde sous-fenêtres (82 ; 83) dans ladite fenêtre, ledit numéro d'adressage étant obtenu en concaténant d'une part soit le numéro contenu dans ladite seconde sous-fenêtre (82) soit un numéro réduit déduit du numéro contenu dans ladite seconde sous-fenêtre et d'autre part soit le numéro contenu dans ladite première sous-fenêtre (83) soit un numéro réduit déduit du numéro contenu dans ladite première sous-fenêtre (83).

12. Procédé selon la revendication 11, caractérisé en ce que ledit numéro téléphonique dudit abonné comprend neuf chiffres et est noté ZABPQMCDU,
en ce que ladite fenêtre (81) contient le numéro BPQMCDU,
en ce que ladite première sous-fenêtre (82) contient le numéro BPQ,
en ce que ladite seconde sous-fenêtre (83) contient le numéro MCDU,
et en ce que ledit numéro d'adressage est :
- soit BPQMCDU, si le numéro BPQ contenu dans la première sous-fenêtre est conservé ;
- soit xyz MCDU, si le numéro BPQ contenu dans la première sous-fenêtre est remplacé par le numéro réduit xyz ;
- soit xyz abcd, si le numéro BPQ contenu dans la première sous-fenêtre est remplacé par le numéro réduit xyz et si le numéro MCDU contenu dans la seconde sous-fenêtre est remplacé par le numéro réduit abcd.

13. Procédé selon l'une quelconque des revendications 10 à 12, caractérisé en ce que lesdites informations caractéristiques dudit abonné sont les informations contenues dans le champ "identité du premier demandé" (75) du message initial d'adresse (MIF ; 71) accompagnant ladite demande de connexion renvoyée vers la messagerie (2) et possédant une fonction de signalisation.

14. Procédé selon l'une quelconque des revendications 10 à 13, caractérisé en ce que lors de l'étape de rappel automatique dudit abonné (1), le numéro de téléphone dudit abonné est calculé par ladite messagerie (2) à partir dudit numéro d'adressage de la zone de stockage.

15. Procédé selon l'une quelconque des revendications 1 à 14, caractérisé en ce qu'il comprend une étape (54) d'appel de la messagerie (2) par l'abonné (1), afin que ledit abonné (1) prenne connaissance d'au moins un éventuel message.

16. Procédé selon la revendication 15, caractérisé en ce que lors de ladite étape d'appel de la messagerie (2) par l'abonné (1), ledit numéro d'adressage de la zone de stockage est retrouvé (510) par ladite messagerie (2) à partir desdites informations caractéristiques dudit abonné (1), lesdites informations caractéristiques dudit abonné étant contenues dans le champ "identité de la ligne appelante" (74) du message initial d'adresse (MIF ; 71) accompagnant ledit appel de la messagerie (2) par l'abonné (1) et possédant une fonction de signalisation.

17. Procédé selon l'une quelconque des revendications 5 à 16, caractérisé en ce qu'il comprend une étape d'armement/désarmement de ladite zone de stockage à laquelle ledit abonné (1) est lié de façon biunivoque, le désarmement, respectivement l'armement, consistant à inhiber, respectivement autoriser, ladite étape de rappel automatique dudit abonné.

18. Procédé selon l'une quelconque des revendications 1 à 17, caractérisé en ce que ledit système de radiomessagerie cellulaire est un système GSM (Global System for Mobile communications).

19. Procédé selon l'une quelconque des revendications 1 à 18, caractérisé en ce que ledit message appartient au groupe comprenant :
_ les messages vocaux ;
_ les télécopies
_ les consultations de bases de données.

## Claims

1. Message handling system management method for a cellular radio paging system in which a subscriber to whom a connection request is addressed is liable to be temporarily unavailable, the said method comprising the following steps:
- it is detected that the subscriber (1) is temporarily unavailable;
- the said connection request is diverted to the said message handling system (2);
- the said message handling system (2) stores a message intended to be delivered in recorded form to the subscriber (1) who is temporarily unavailable, the said message-storing step being accompanied by a step (63) for transmission, via a short message system (SMS), of a short message to the subscriber (1) who is temporarily unavailable,
characterised in that the said method also comprises the following step:
- on receipt (64) of a recorded acknowledgement of the said short message, the said message handling system (2) makes (65) an immediate attempt to call back the subscriber (1) so as to deliver the said stored message to the subscriber (1), the said recorded acknowledgment indicating that the said subscriber (1) is obtainable.

2. Method according to Claim 1, characterised in that the said callback strategy also consists in systematically calling back (66) the subscriber (1) at the end of predetermined periods after the said immediate attempt if the subscriber (1), although obtainable, is still unavailable,
and in that the said predetermined periods are a function of at least one of the parameters belonging to the group comprising:
- the time;
- the date;
- the type of unavailability of the subscriber (1), that is to say "busy" or "no reply".

3. Method according to either of Claims 1 and 2, characterised in that the said callback strategy also consists in systematically calling back (68) the subscriber (1) at the end of predetermined periods after the point in time when it is detected that the subscriber (1) is temporarily unavailable.

4. Method according to Claim 3, characterised in that the said predetermined periods are a function of at least one of the parameters belonging to the group comprising:
- the time;
- the date;
- the type of unavailability of the subscriber (1), that is to say "unobtainable" or "busy" or "no reply".

5. Method according to any one of Claims 1 to 4, characterised in that the said message-storing step consists in recording the said message in a storage zone biuniquely linked to the subscriber (1),
and in that the said storage zone is created (58) dynamically when, on the one hand, no other storage zone is associated with the said subscriber (1) and, on the other hand, the said message intended for the said subscriber has to be stored.

6. Method according to Claim 5, characterised in that it also comprises a step for erasure of the said message stored in the said storage zone,
and in that the said storage zone is dynamically suppressed when it no longer contains any messages.

7. Method according to Claim 6, characterised in that the said storage zone can contain two types of message, that is to say messages identified as having been delivered to the subscriber (1) and messages identified as still not having been delivered to the subscriber (1),
and in that the said erasure step takes place after a discrete interval depending on the type of message.

8. Method according to any one of Claims 1 to 7, characterised in that the said callback strategy also comprises detection (55) of an auto-call by the said message handling system (2), the said auto-call being a connection request addressed to the subscriber (1) by the said message handling system (2) and diverted to the said message handling system after it has been detected that the subscriber is temporarily unavailable,
and in that a detected auto-call is broken (512).

9. Method according to Claim 8, characterised in that the detection of an auto-call consists in, on the one hand, comparing the information contained in the "calling line identity" field (74) and the "called party address" field (73) in the initial address message (MIF; 71) accompanying the said callback to the subscriber (1) by the message handling system (2) and having a signalling function and, on the other hand, analysing the information contained in the "diverted call indicator" field (72) of the said initial address message (MIF; 71).

10. Message according to any one of Claims 5 to 9, characterised in that the said storage zone has an addressing number (84; 85) calculated on the basis of characteristic information for the said subscriber.

11. Method according to Claim 10, characterised in that the said characteristic information for the said subscriber comprises the telephone number (84; 85) of the said subscriber
and in that the calculation of the said addressing number of the storage zone consists in:
- windowing the said telephone number of the subscriber by placing a justified window (81) on the last digit of the said telephone number, then
- sub-windowing the said window (81) by placing [lacuna] least a first and a second sub-window (82; 83) in the said window, the said addressing number being obtained by concatenating, on the one hand, either the number contained in the said second sub-window (82) (sic) or a reduced number derived from the number contained in the said second sub-window and, on the other hand, either the number contained in the said first sub-window (83) (sic) or a reduced number derived from the number contained in the said first sub-window (83) (sic).

12. Method according to Claim 11, characterised in that the said telephone number of the said subscriber comprises nine digits and is written ZABPQMCDU,
in that the said window (81) contains the number BPQMCDU,
in that the said first sub-window (82) contains the number BPQ,
in that the said second sub-window (83) contains the number MCDU
and in that the said addressing number is:
- either BPQMCDU, if the number BPQ contained in the first sub-window is retained;
- or xyz MCDU, if the number BPQ contained in the first sub-window is replaced by the reduced number xyz;
- or xyz abcd, if the number BPQ contained in the first sub-window is replaced by the reduced number xyz and if the number MCDU contained in the second sub-window is replaced by the reduced number abcd.

13. Method according to any one of Claims 10 to 12, characterised in that the said characteristic information for the said subscriber is information contained in the "identity of the first called party" field (75) of the initial address message (MIF; 71) accompanying the said connection request diverted to the message handling system (2) and having a signalling function.

14. Method according to any one of Claims 10 to 13, characterised in that during the step for automatically calling back the said subscriber (1) the telephone number of the said subscriber is calculated by the said message handling system (2) on the basis of the said addressing number for the storage zone.

15. Method according to any one of Claims 1 to 14, characterised in that it comprises a step (54) for the subscriber (1) calling the message handling system (2) in order for the said subscriber (1) to acquaint him/herself with at least one possible message.

16. Method according to Claim 15, characterised in that during the said step for the subscriber (1) calling the message handling system (2) the said addressing number for the storage zone is retreived (510) by the said message handling system (2) on the basis of the said characteristic information for the said subscriber (1), the said characteristic information for the said subscriber being contained in the "calling line identity" field (74) of the initial address message (MIF; 71) accompanying the said call to the message handling system (2) by the subscriber (1) and having a signalling function.

17. Method according to any one of Claims 5 to 16, characterised in that it comprises a step for enabling/disabling the said storage zone to which the said subscriber (1) is biuniquely linked, the disabling consisting in inhibiting and the enabling consisting in permitting the said step for automatically calling back the said subscriber.

18. Method according to any one of Claims 1 to 17, characterised in that the said cellular radio paging system is a GSM system (Global System for Mobile communications).

19. Method according to any one of Claims 1 to 18, characterised in that the said message belongs to the group comprising:
- voice messages;
- faxes;
- database interrogations.

## Patentansprüche

1. Verwaltungsverfahren eines Nachrichtensystems im Rahmen eines Zellularfunknachrichtensystems bei dem ein Benutzer, an das eine Anschlußanforderung ergeht, vorübergehend nicht verfügbar ist, wobei das Verfahren die folgenden Schritte umfaßt:
- es wird festgestellt, daß der Benutzer (1) vorübergehend nicht verfügbar ist;
- die Anschlußanforderung wird an das Meldesystem (2) zurückgesendet;
- das Meldesystem (2) speichert eine Nachricht, die verzögert an den vorübergehend nicht verfügbaren Benutzer (1) gesendet werden soll, wobei dieser Schritt der Speicherung einer Meldung über ein System für Kurznachrichten (SMS), von einem Schritt (63) zum Senden einer Kurznachricht zum vorübergehend nicht verfügbaren Benutzer (1) begleitet wird,
dadurch gekennzeichnet, daß dieses Verfahren ferner den folgenden Schritt umfaßt:
- beim Empfang (64) einer verzögerten Empfangsbestätigung der Kurzmeldung unternimmt das Meldesystem (2) sofort den Versuch (65), den Benutzer (1) wieder anzurufen, um dem Benutzer (1) die gespeicherte Nachricht zu übermitteln, wobei die verzögerte Empfangsbestätigung anzeigt, daß der Benutzer (1) nun erreichbar ist.

2. Verfahren gemäß Anspruch 1,
dadurch gekennzeichnet, daß die Rückrufstrategie auch darin besteht, den Benutzer (1) systematisch nach vorgegebenen Zeiten nach dem sofortigen Versuch wieder anzurufen (66), wenn der Benutzer (1) zwar erreichbar aber immer noch nicht verfügbar ist und,
daß die vorgegebenen Zeiten eine Funktion von mindestens einem der Parameter aus der Gruppe sind, die folgendes umfaßt:
- die Uhrzeit;
- das Datum;
- die Art der Nichtverfügbarkeit des Benutzers (1), nämlich "besetzt" oder "meldet sich nicht".

3. Verfahren gemäß einem der Ansprüche 1 oder 2,
dadurch gekennzeichnet, daß die Rückrufstrategie auch darin besteht, den Benutzer (1) systematisch nach vorgegebenen Zeiten wieder anzurufen (68), nach dem Zeitpunkt, zu dem festgestellt wird, daß der Benutzer (1) vorübergehend nicht verfügbar ist.

4. Verfahren gemäß Anspruch 3,
dadurch gekennzeichnet, daß diese vorgegebenen Zeiträume eine Funktion von mindestens einem der Parameter aus der Gruppe sind, die folgendes umfaßt:
- die Uhrzeit;
- das Datum;
- die Art der Nichtverfügbarkeit des Benutzers (1), nämlich "nicht erreichbar" oder "besetzt" oder "meldet sich nicht".

5. Verfahren gemäß einem der Ansprüche 1 bis 4,
dadurch gekennzeichnet, daß der Schritt zum Speichern einer Nachricht darin besteht, daß diese Nachricht in einem Speicherbereich aufgezeichnet wird, der eineindeutig mit dem Benutzer (1) verbunden ist und,
daß dieser Speicherbereich in dynamischer Form erzeugt wird (58), wenn einerseits kein anderer Speicherbereich dem Benutzer (1) zugeordnet ist und andererseits die an den Benutzer gerichtete Nachricht gespeichert werden muß.

6. Verfahren gemäß Anspruch 5,
dadurch gekennzeichnet, daß es ebenfalls einen Schritt zum Löschen der im Speicherbereich gespeicherten Nachricht umfaßt und,
daß dieser Speicherbereich in dynamischer Weise eliminiert wird, wenn er keine Nachricht enthält.

7. Verfahren gemäß Anspruch 6,
dadurch gekennzeichnet, daß der Speicherbereich zwei Arten von Nachrichten enthalten kann, nämlich die Nachrichten, die als an den Benutzer (1) geleitet und die Nachrichten, die als noch nicht an den Benutzer (1) geleitet gelten, und daß der Schritt zum Löschen nach einer Zeitdauer erfolgt, die vom Typ der Nachricht abhängt.

8. Verfahren gemäß einem der Ansprüche 1 bis 7,
dadurch gekennzeichnet, daß die Rückrufstrategie auch darin besteht, einen Selbstanruf des Meldesystems (2) festzustellen (55), wobei es sich beim Selbstanruf um eine Verbindungsanforderung an den Benutzer (1) durch das Meldesystem (2) handelt, die an das Meldesystem zurückgesendet wird, nachdem festgestellt wurde, daß der Benutzer vorübergehend nicht erreichbar ist und, daß ein festgestellter Selbstanruf unterbrochen wird (512).

9. Verfahren gemäß Anspruch 8,
dadurch gekennzeichnet, daß die Erkennung eines Selbstanrufes darin besteht, einerseits die in den Feldern "Identität der rufenden Leitung" (74) und "Adresse des Gesuchten" (73) der ursprünglichen Nachricht mit der Adresse (MIF; 71), welche den Rückruf des Benutzers (1) durch das Meldesystem (2) begleitet und eine Signalfunktion hat, enthaltenen Informationen zu vergleichen, und andererseits die im Feld "Rückrufangabe" (72) der Ursprungsnachricht mit der Adresse (MIF; 71) zu analysieren.

10. Verfahren gemäß einem der Ansprüche 5 bis 9,
dadurch gekennzeichnet, daß der Speicherbereich eine Adressierungsnummer (84; 85) hat, die auf der Grundlage von charakteristischen Informationen des Benutzers berechnet wird.

11. Verfahren gemäß Anspruch 10,
dadurch gekennzeichnet, daß die charakteristischen Informationen des Benutzers die Telefonnummer (84; 85) des Benutzers umfassen und,
daß die Berechnung der Adressierungsnummer des Speicherbereiches aus folgendem besteht:
- Einfenstern der Telefonnummer des Benutzers durch Anbringen eines auf die letzte Ziffer der Telefonnummer ausgerichteten Fensters (81) und dann
- das Fenster (81) in Unterfenster dadurch einteilen, daß mindestens ein erstes und ein zweites Unterfenster (82; 83) in das Fenster eingebracht werden, wobei die Adressierungsnummer dadurch erhalten wird, daß einerseits entweder die im zweiten Unterfenster (82) enthaltene Nummer oder eine reduzierte Nummer, die von der im zweiten Unterfenster enthaltenen Nummer deduziert wird, und andererseits entweder die im ersten Unterfenster (83) enthaltene Nummer oder eine reduzierte Nummer, die von der im ersten Unterfenster (83) enthaltenen Nummer deduziert wird, miteinander verkettet werden.

12. Verfahren gemäß Anspruch 11,
dadurch gekennzeichnet, daß die Telefonnummer des Benutzers neun Ziffern umfaßt und ZABPQMCDU notiert wird,
daß das Fenster (81) die Nummer BPQMCDU umfaßt,
daß das erste Unterfenster (82) die Nummer BPQ umfaßt,
daß das zweite Unterfenster (83) die Nummer MCDU umfaßt und,
daß die Adressierungsnummer folgende ist:
- entweder BPQMCDU, wenn die im ersten Unterfenster enthaltene Nummer BPQ erhalten wird;
- oder xyz MCDU, wenn die im ersten Unterfenster enthaltene Nummer BPQ durch die reduzierte Nummer xyz ersetzt wird;
- oder xyz abcd, wenn die im ersten Unterfenster enthaltene Nummer BPQ durch die reduzierte Nummer xyz ersetzt wird, und die im zweiten Unterfenster enthaltene Nummer MCDU durch die reduzierte Nummer abcd ersetzt wird.

13. Verfahren gemäß einem der Ansprüche 10 bis 12,
dadurch gekennzeichnet, daß es sich bei den charakteristischen Informationen des Benutzers um die Informationen handelt, die im Feld "Identität des zuerst Verlangten" (75) der Ursprungsnachricht mit der Adresse (MIF; 71) enthalten ist, welche den an das Meldesystem (2) zurückgesendeten Verbindungsantrag begleitet und die eine Signalfunktion ausübt.

14. Verfahren gemäß einem der Ansprüche 10 bis 13,
dadurch gekennzeichnet, daß beim automatischen Rückrufschritt des Benutzers (1), die Telefonnummer des Benutzers vom Meldesystem (2) ausgehend von der Adressierungsnummer des Speicherbereiches berechnet wird.

15. Verfahren gemäß einem der Ansprüche 1 bis 14,
dadurch gekennzeichnet, daß es einen Schritt (54) umfaßt, bei dem das Meldesystem (2) durch den Benutzer (1) angerufen wird, damit der Benutzer (1) von mindestens einer eventuell vorhandenen Nachricht Kenntnis nimmt.

16. Verfahren gemäß Anspruch 15,
dadurch gekennzeichnet, daß beim Schritt, bei dem das Meldesystem (2) durch den Benutzer (1) angerufen wird, die Adressierungsnummer des Speicherbereiches vom Meldesystem (2) wiedergefunden wird (510), ausgehend von den charakteristischen Informationen des Benutzers (1), wobei diese charakteristischen Informationen im Feld "Identität der anrufenden Leitung" (74) der Ursprungsnachricht mit der Adresse (MIF; 71), welche den Anruf des Meldesystems (2) durch den Benutzer (1) begleiten und Signalfunktionen ausüben, enthalten sind.

17. Verfahren gemäß einem der Ansprüche 5 bis 16,
dadurch gekennzeichnet, daß es einen Schritt zum Aktivieren/Deaktivieren des Speicherbereiches umfaßt, mit dem der Benutzer (1) eineindeutig verbunden ist, wobei das Aktivieren bzw. das Deaktivieren in der Unterdrückung bzw. Zulassung des Schrittes des automatischen Rückrufs des Benutzers besteht.

18. Verfahren gemäß einem der Ansprüche 1 bis 17,
dadurch gekennzeichnet, daß es sich beim Zellularfunknachrichtensystem um ein GSM System handelt (Global System for Mobile Communications).

19. Verfahren gemäß einem der Ansprüche 1 bis 18,
dadurch gekennzeichnet, daß die Nachricht der Gruppe angehört, die folgendes umfaßt:
- Sprechverbindungen;
- Fernkopien;
- Suchen in Datenbänken.
